# EUROPÄISCHE PATENTSCHRIFT

(11) **EP 2 646 305 B1**
(45) Veröffentlichungstag und Bekanntmachung des Hinweises auf die Patenterteilung: **25.10.2017**
(21) Anmeldenummer: 11787865.2
(22) Anmeldetag: 23.11.2011
(51) Int. Cl.: B60W 30/16, B60W 30/18, B60W 10/08, B60W 10/184, B60L 7/18, B60L 11/18

(54) **VERFAHREN ZUM BETREIBEN EINES FAHRZEUGS UND FAHRERASSISTENZEINRICHTUNG**
METHOD FOR OPERATING A VEHICLE AND DRIVER ASSISTANCE DEVICE
PROCÉDÉ POUR FAIRE FONCTIONNER UN VÉHICULE ET DISPOSITIF D'ASSISTANCE AU CONDUCTEUR

(30) Priorität: 30.11.2010 DE 102010052964
(43) Veröffentlichungstag der Anmeldung: 09.10.2013
(73) Patentinhaber: Valeo Schalter und Sensoren GmbH, 74321 Bietigheim-Bissingen (DE)
(72) Erfinder: SCHULER, Thomas, 75446 Wiernsheim (DE)
(86) Internationale Anmeldenummer: PCT/EP2011/070802
(87) Internationale Veröffentlichungsnummer: WO 2012/072464

(56) Entgegenhaltungen:
- EP-A1- 1 193 106
- EP-A1- 2 168 827
- EP-A2- 1 839 985
- WO-A1-2009/021598
- GB-A- 2 470 478
- US-A- 5 251 680
- US-A1- 2010 133 025

## Beschreibung

Die Erfindung betrifft ein Verfahren zum Betreiben eines Fahrzeugs, bei welchem in Schub- und/oder Bremsphasen des Fahrzeugs Energie rekuperiert und in einen fahrzeuginternen Energiespeicher gespeichert wird. Die Erfindung betrifft auch eine Fahrerassistenzeinrichtung für ein Fahrzeug.

Es sind Fahrzeuge mit einer sogenannten Nutzbremse oder Rekuperationsbremse bekannt, bei denen Bremsenergie nicht dissipiert, sondern rückgewonnen wird. Bei den meisten Schienenfahrzeugen erfolgt beispielsweise die Rückspeisung von Bremsenergie in das Stromnetz, während manche elektrisch betriebene Kraftfahrzeuge einen Energiespeicher aufweisen, in den die rückgewonnene Energie eingespeist werden kann. In Hybrid- oder Elektroautos können die für den Antrieb verwendeten Elektromotoren in der Regel auch als Generatoren betrieben werden und so nutzbringend für den Bremsvorgang eingesetzt werden. Der vom Generator erzeugte Strom wird dann beispielsweise in sogenannte elektrochemische Doppelschichtkondensatoren (Supercap, Goldcap) eingespeist und gespeichert. Die Rekuperation erfolgt häufig im Schubbetrieb des Kraftwagens.

Die Energierückführung erfolgt hierbei insbesondere aufgrund der vom Fahrer vorgegebenen Fahrparameter und/oder bestimmter statistischer Betrachtungen. Beispielsweise kann für die Frage, ob eine Energierückführung stattfinden soll, herangezogen werden, ob sich der Kraftwagen im Schubbetrieb befindet, beschleunigt oder vom Fahrzeugführer eine Bremsanforderung erfolgt. Hierbei ist es schwierig zu entscheiden, ob der Einsatz der mechanischen Bremse (große Bremswirkung) oder eine Rückspeisung über den elektrischen Generator (mäßige bis mittlere Bremswirkung) verwendet werden soll. Es stellt sich die Frage nach einer Konfiguration, in der die Energierückgewinnung optimal ausgenutzt werden kann.

Aus der DE 10 2005 054 614 A1 ist ein Verfahren zum Rückgewinnen von Energie bei einem Hybridfahrzeug bekannt, das neben einem Verbrennungsmotor auch eine elektrische Maschine sowie eine hydraulische oder pneumatische Bremsanlage umfasst. Die Bremsanlage wird mittels eines Fußbremspedals betätigt, wobei wenigstens der Anfangsbereich einer Pedalbetätigung mithilfe eines Sensors erfasst wird und die elektrische Maschine im Generatorbetrieb betrieben wird, wenn der Fahrer das Fußbremspedal im Anfangsbereich betätigt.

Aus der EP 0 361 708 A2 ist ein Fahrzeug mit einer regenerativen und einer reibungsbasierten Bremse bekannt, wobei die Verteilung der Bremsenergie auf die beiden Bremsen in Abhängigkeit der insgesamt vom Fahrer angeforderten Bremskraft und einer maximalen Bremskraft, bei der das Fahrzeug noch nicht schleudert, berechnet wird.

Auch die US 5,399,000 beschreibt ein gemischtes Bremssystem für ein Elektrofahrzeug mit einer hydraulischen und einer regenerativen Bremse, wobei die hydraulische Bremse vor allem während des Beginns des Bremsvorgangs eingesetzt wird.

Die EP 1 193 106 A1 offenbart ein Verfahren gemäß dem Oberbegriff des Anspruchs 1 und eine entsprechende Einrichtung. Es ist Aufgabe der Erfindung, ein Verfahren und eine Fahrerassistenzeinrichtung bereitzustellen, mithilfe derer der Bremsvorgang eines Fahrzeugs verkehrssicher gestaltet werden kann, und möglichst viel Bremsenergie rückgewonnen werden soll.
Diese Aufgabe wird durch ein Verfahren, welches die Merkmale des Patentanspruchs 1 aufweist, sowie eine Fahrerassistenzeinrichtung, welche die Merkmale des Patentanspruchs 9 aufweist, gelöst.
Das erfindungsgemäße Verfahren dient zum Betreiben eines Fahrzeugs, bei welchem in Schub- und/oder Bremsphasen des Fahrzeugs Energie rekuperiert und in einen fahrzeuginternen Energiespeicher gespeichert wird. Bei dem Fahrzeug kann es sich insbesondere um einen Kraftwagen handeln, der über einen Verbrennungsmotor und/oder Elektromotor verfügt. Unter Schubphase ist insbesondere ein Betriebszustand des Fahrzeugs zu verstehen, bei dem der Antriebsmotor des Fahrzeugs eine eigene Bremswirkung entfaltet und als sogenannte Motorbremse wirkt jedoch eine Bremsanlage des Fahrzeugs nicht betätigt ist. Unter Bremsphase ist insbesondere eine solche Zeitdauer zu verstehen, während der ein Abbremsvorgang des Fahrzeugs durch eine Bremsanlage im Fahrzeug aktiv herbeigeführt wird. Während solcher Schub- und/oder Bremsphasen wird Energie rekuperiert, d.h. es wird insbesondere Bremsenergie rückgewonnen. Diese Bremsenergie kann insbesondere in den im Fahrzeug vorhandenen Energiespeicher rückgespeist werden. Insbesondere kann vorgesehen sein, dass die Bremsenergie nicht in Form von Wärme verloren geht. Es können auch mehrere, insbesondere verschiedene Energiespeicher im Fahrzeug vorhanden sein.

Erfindungsgemäß zeichnet sich das Verfahren dadurch aus, dass die Umgebung des Fahrzeugs mittels einer Detektoreinrichtung erfasst wird und abhängig von einem Erfassen eines Objekts in der Fahrzeugumgebung zumindest ein Objektcharakteristikum ausgewertet wird. Unter Umgebung des Fahrzeugs kann insbesondere ein definierter Erfassungsbereich der Detektoreinrichtung verstanden werden. Insbesondere ist die Umgebung des Fahrzeugs ein sich in Fahrtrichtung des Fahrzeugs erstreckendes Fahrzeugvorfeld. Die Detektoreinrichtung kann insbesondere dazu ausgebildet sein, ein Objektcharakteristikum eines Objekts direkt zu erfassen bzw. zu detektieren. Die Detektoreinrichtung kann insbesondere dazu ausgebildet sein, in Verkehrssituationen typischerweise auftretende Objekte zu erfassen, beispielsweise Fußgänger, Fahrzeuge (Fahrrad, Motorrad, Kraftwagen etc.) und Objekte, die der Verkehrsregelung dienen (Verkehrszeichen, Lichtzeichenanlagen, Fahrbahnrandbegrenzungen etc.). Erfindungsgemäß wird zumindest ein Objektcharakteristikum ausgewertet. Bei dem Objektcharakteristikum kann es sich um ein visuelles Merkmal eines erfassten Objekts handeln, z.B. eine Form, Beschaffenheit oder ein äußeres Erscheinungsbild des Objekts. Erfindungsgemäß wird abhängig von der Auswertung des Objektcharakteristikums die Schub- und/oder Bremsphase automatisch an zumindest einen, den Energiespeicher beschreibenden Parameter angepasst durchgeführt. Die Schub- und/oder Bremsphase kann damit insbesondere sowohl in Abhängigkeit des Objektcharakteristikums als auch in Abhängigkeit des zumindest einen Parameters gesteuert werden.

Bei dem Parameter kann es sich insbesondere um einen physikalischen Parameter des Energiespeichers handeln, der die Eigenschaften des Energiespeichers als solchem beschreibt. Bei dem Parameter kann es sich jedoch auch um einen vorgebbaren Parameter handeln, der eine gewünschte Ansteuerung des Energiespeichers (z.B. eine vorgebbare Soll-Energie, die in den Energiespeicher eingespeist werden soll) charakterisiert.

Das Verfahren erlaubt, die Schub- und/oder Bremsphasen des Fahrzeugs an die jeweilige momentane Verkehrssituation angepasst durchzuführen. Hierdurch wird sichergestellt, dass sich das Fahrzeug verkehrssicher und verkehrsregelkonform verhält. Der Bremsvorgang kann intelligent an die jeweils vorherrschende Situation angepasst werden. Das Fahrzeug reagiert vorausschauend und kann einen Fortbewegungsablauf festlegen, welcher einerseits zu einem sicheren Bremsvorgang führt und andererseits eine Rückspeisung von möglichst viel Bremsenergie erlaubt. Energie kann ideal rückgespeist werden. Die Bremsenergieverluste lassen sich erheblich reduzieren.

Es kann vorgesehen sein, dass unmittelbar im Anschluss an die Auswertung des Objektcharakteristikums eine Schub- und/oder Bremsphase automatisch eingeleitet und durchgeführt wird. Auf das Auswerten folgt dann ohne wesentliche zeitliche Unterbrechung sofort die Schub- und/oder Bremsphase, so dass sie über einen langen Zeitraum durchgeführt werden kann. Dies ermöglicht eine sehr variable Ausgestaltung dieser Phase. Energie kann über einen langen Zeitraum rekuperiert werden.

Es kann jedoch auch vorgesehen sein, dass zeitlich unmittelbar im Anschluss an die Auswertung des Objektcharakteristikums über ein erstes Zeitintervall keine Schub- und/oder Bremsphase erfolgt und zeitlich unmittelbar im Anschluss an das erste Zeitintervall die an den zumindest einen Parameter angepasste Durchführung der Schub- und/oder Bremsphase erfolgt. Die Auswertung des Objektcharakteristikums kann dann insbesondere zunächst zu einer Vorausschau führen, wie die Schub- und/oder Bremsphase in der Zukunft abzulaufen hat, ohne dass eine solche Phase bereits eingeleitet werden müsste. Die entsprechenden Bremssysteme können beispielsweise bereits entsprechend parametriert werden, sodass der vorausberechnete Bremsvorgang zum gewünschten Zeitpunkt einsetzen und optimal angepasst erfolgen kann. Die Ausführungsform erlaubt ein sehr vorausschauendes Fahrzeugverhalten und garantiert eine intelligente Anpassung der Schub- und/oder Bremsvorgänge an die jeweils zu erwartende zukünftige Verkehrslage.

Vorzugsweise ist der zumindest eine den Energiespeicher beschreibende Parameter eine Ladekapazität des Energiespeichers. Die Ladekapazität gibt an, wie viel Energie von dem Energiespeicher gespeichert werden kann. Unter Kenntnis der Ladekapazität kann dann die Schub- und/oder Bremsphase automatisch so durchgeführt werden, dass die rekuperierte Bremsenergie die Kapazität des Energiespeichers sehr gut ausfüllt, diesen jedoch nicht überlädt. Alternativ oder zusätzlich kann vorgesehen sein, dass der zumindest eine, den Energiespeicher beschreibende Parameter, einen Ladezustand des Energiespeichers charakterisiert. Ein bereits sehr weit aufgeladener Energiespeicher kann nur noch wenig rekuperierte Energie aufnehmen, sodass unter Kenntnis des Ladezustands der Anteil der Schub- und/oder Bremsphase, während dem rekuperiert werden soll, entsprechend angepasst erfolgen kann. Alternativ oder zusätzlich kann auch vorgesehen sein, dass der den Energiespeicher beschreibende Parameter zumindest einen Teil einer Ladekurve des Energiespeichers charakterisiert. Die Schub- und/oder Bremsphase kann dann hinsichtlich eingestellter Verzögerungswerte so gestaltet werden, dass die jeweils momentan produzierte und zu rekuperierende Bremsenergie an die Ladecharakteristik des Energiespeichers angepasst erfolgt. Der Energiespeicher kann sehr schonend geladen werden und seine Lebenszeit vergrößert sich.

Vorzugsweise umfasst das Fahrzeug zumindest zwei fahrzeuginterne Energiespeicher. Die Schub- und/oder Bremsphase wird dann automatisch so an die zumindest zwei Energiespeicher angepasst durchgeführt, dass ein erster Teil der zu rekuperierenden Energie in einen ersten der zumindest zwei Energiespeicher eingespeist wird und ein zweiter Anteil der zu rekuperierenden Energie in einen vom ersten verschiedenen zweiten der zumindest zwei Energiespeicher eingespeist wird. Bei den beiden fahrzeuginternen Energiespeichern kann es sich dann insbesondere um Energiespeicher handeln, bei denen die Energiespeicherung nach unterschiedlichen Funktionsprinzipien erfolgt. Es kann der für die Energiespeicherung energetisch perfekte Rekuperationspfad gewählt werden. Sind die Rekuperationsleistungen beispielsweise sehr hoch, kann die Bremsenergie hauptsächlich in einen solchen Energiespeicher eingeleitet werden, der ein sehr schnelles Ladeverhalten aufweist und bei den hohen Leistungen nicht beschädigt wird. Ist dagegen die pro Zeiteinheit rekuperierte Bremsenergie gering, kann eine Einspeisung in einen Energiespeicher erfolgen, dessen maximale Ladeleistung zwar gering ist, der jedoch hohe Kapazitäten aufweist. Die Auswahl des Rekuperationspfads ermöglicht damit eine sehr bedarfsgerechte Rückspeisung von Energie, die zum Beispiel an die jeweilige Bremsleistung angepasst erfolgt. Es wird der für die jeweilige Situation geeignetste Energiespeicher ausgewählt.

Vorzugsweise ist das Objektcharakteristikum, welches ausgewertet wird, eine Geschwindigkeit des erfassten Objekts, insbesondere eines vorausfahrenden Fahrzeugs. Besteht beispielsweise eine von Null verschiedene Relativgeschwindigkeit zwischen dem Fahrzeug, das im Rahmen des Verfahrens betrieben wird, und einem anderen Verkehrsobjekt, so ist gegebenenfalls eine Verzögerung angezeigt und das Einleiten einer Schub- und/oder Bremsphase geboten. Die Auswertung des Objektcharakteristikums kann dann insbesondere zu dem Ergebnis führen, dass eine Kollisionsgefahr mit dem Objekt besteht und ein Bremsen einzuleiten ist. Kollisionen werden auf diese Weise sicher vermieden und eine Bedienperson wird beim Führen des Fahrzeugs unterstützt. Alternativ oder zusätzlich kann vorgesehen sein, dass als Objektcharakteristikum eine Form und/oder eine Farbe und/oder eine Textur des Objekts ausgewertet wird. Diese Ausführungsform ist insbesondere bei der automatischen Verkehrszeichenerkennung vorteilhaft. Handelt es sich bei dem Objekt beispielsweise um ein Stopp-Schild, so kann ebenfalls das Einleiten eines Abbremsvorgangs angezeigt sein. Im Rahmen der Auswertung des Objektcharakteristikums kann dann beispielsweise das Stopp-Schild anhand seiner charakteristischen Form (Oktogon) und/oder seiner Signalfarbe (rot) als Stopp-Schild identifiziert werden und so abhängig von dieser Identifikation die Schub- und/oder Bremsphase angepasst durchgeführt werden.

Vorzugsweise umfasst der Energiespeicher einen Kondensator, insbesondere einen elektrochemischen Doppelschichtkondensator. Diese auch als Supercap oder Goldcap bezeichneten Kondensatoren zeichnen sich durch hohe Energiedichten aus und erlauben aufgrund ihres geringen Innenwiderstands eine sehr schnelle Aufladung. Sie arbeiten elektrostatisch. Der Energiespeicher kann auch einen chemischen Energiespeicher umfassen, bei dem die rekuperierte Bremsenergie dazu verwendet wird, eine endotherme chemische Umwandlung zu bewirken. Insbesondere kann der Energiespeicher auch eine elektrochemische Zelle, insbesondere eine Traktionsbatterie, umfassen. Es ist auch ein thermischer Energiespeicher, insbesondere ein Latentwärmespeicher, möglich, in dem beim Abbremsvorgang entstandene Wärme direkt gespeichert werden kann, ohne dass eine Umformung in eine andere Energieform stattfinden müsste. Der Energiespeicher kann auch ein mechanischer Energiespeicher, z.B. ein Schwungrad, sein. Er kann auch einen Druckbehälter für eine Klimaanlage umfassen. Es können auch mehrere dieser Energiespeicher im Fahrzeug vorliegen, wobei während des Rekuperationsvorgangs Energie anteilsmäßig in mehrere dieser Energiespeicher eingespeist werden kann.

Im Fahrzeug können zwei verschiedene Bremsen bzw. Bremssysteme vorgesehen sein, nämlich eine konventionelle mechanische Reibungsbremse, welche keine Rekuperation von Bremsenergie ermöglicht, als auch eine Rekuperationsbremse, die alternativ oder zusätzlich zur mechanischen Bremse zugeschaltet werden kann. Wird beispielsweise als Energiespeicher ein Latentwärmespeicher verwendet, so kann auch nur ein einziges Bremssystem, z.B. in Form der mechanischen Reibungsbremse, vorgesehen sein, deren beim Bremsvorgang entstehende Abwärme in den Latentwärmespeicher rekuperierbar ist.

Vorzugsweise erfolgt jedoch das Rekuperieren von Energie mittels einer elektrischen Maschine, welche insbesondere auch als Antriebsmaschine des Fahrzeugs betreibbar ist. Das Fahrzeug kann dann insbesondere elektromotorisch betreibbar sein, wobei der für den Antrieb eingesetzte Elektromotor während der Schub- und/oder Bremsphase als Generator einsetzbar ist. Der elektrischen Maschine kommt dann eine doppelte Funktionalität zu, sodass Gewicht und Bauraum im Fahrzeug gespart und damit die Energieeffizienz des Fahrzeugs gesteigert wird.

Vorzugsweise erfolgen das Erfassen der Umgebung des Fahrzeugs, das Auswerten des Objektcharakteristikums und das angepasste Durchführen der Schub- und/oder Bremsphase während einer von Bedienhandlungen eines Fahrzeugführers zumindest teilweise unabhängigen automatischen Fahrzeugführung, beispielsweise wenn ein ACC (Adaptive Cruise Control)-System des Fahrzeugs aktiviert wird. Insbesondere kann das Verfahren im Rahmen eines vollautomatischen Fahrens durchgeführt werden. Auch wenn der Fahrzeugführer unaufmerksam ist, können Gefahrensituationen sicher erkannt werden und ein Bremsvorgang eingeleitet werden. Zudem kann das Fahrverhalten vorausschauend so angepasst werden, dass sich eine möglichst hohe Energieeffizienz durch hohe Energierückspeisung während der Schub- und/oder Bremsphasen ergibt. Ein vollautomatisch agierendes Fahrzeug kann das Fahrverhalten an die Vorgaben hoher Sicherheit und Energieeffizienz angepasst optimieren.

Eine erfindungsgemäße Fahrerassistenzeinrichtung ist für ein Fahrzeug ausgebildet und dient zur Steuerung der Speicherung von in Schub- und/oder Bremsphasen des Fahrzeugs rekuperierter Energie in einen fahrzeuginternen Energiespeicher. Die Fahrerassistenzeinrichtung umfasst eine Detektoreinrichtung und eine Steuereinrichtung, wobei die Detektoreinrichtung dazu ausgebildet ist, die Umgebung des Fahrzeugs zu erfassen. Die Steuereinrichtung ist dazu ausgebildet, abhängig von einem Erfassen eines Objekts in der Fahrzeugumgebung durch die Detektoreinrichtung Informationen zumindest eines Objektcharakteristikums auszuwerten und abhängig davon die Schub- und/oder Bremsphase automatisch an zumindest einen den Energiespeicher kennzeichnenden Parameter angepasst durchzuführen.

Vorzugsweise umfasst die Detektoreinrichtung einen Abstandssensor und/oder einen Ultraschallsensor und/oder eine Kamera und/oder einen Radarsensor und/oder einen Lidarsensor. Es können auch mehrere der aufgeführten Detektoreinrichtungen gemeinsam vorliegen, sodass durch komplementäre und redundante Informationen eine qualitativ verbesserte Auswertung des Objektcharakteristikums erfolgen kann.

Vorzugsweise umfasst die Fahrerassistenzeinrichtung ein ACC-System und die Fahrerassistenzeinrichtung ist zum Durchführen des erfindungsgemäßen Verfahrens oder einer vorteilhaften Ausführung davon in einem Betrieb, in dem das ACC-System aktiviert ist, ausgebildet.

Die für das erfindungsgemäße Verfahren vorgestellten bevorzugten Ausführungsformen und deren Vorteile gelten entsprechend für die erfindungsgemäße Fahrerassistenzeinrichtung.

Weitere Merkmale ergeben sich aus den Ansprüchen, den Figuren und der Figurenbeschreibung. Die vorstehend in der Beschreibung genannten Merkmale und Merkmalskombinationen als auch die in der Figurenbeschreibung genannten Merkmale und Merkmalskombinationen und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1: eine schematische Draufsicht auf eine Fahrbahn mit zwei hintereinander fahrenden Fahrzeugen, von denen eines ein Ausführungsbeispiel eines erfindungsgemäßen Fahrerassistenzsystems umfasst;
- Fig. 2: eine schematische Draufsicht auf eine Fahrbahn mit einem Kraftwagen, welcher sich auf eine rote Ampel zu bewegt; und
- Fig. 3: einen schematischen Kurvenverlauf, welcher das Abbremsverhalten des Kraftwagens in Fig. 2 charakterisiert.

In den Figuren sind gleiche oder funktionsgleiche Elemente mit den gleichen Bezugszeichen versehen.

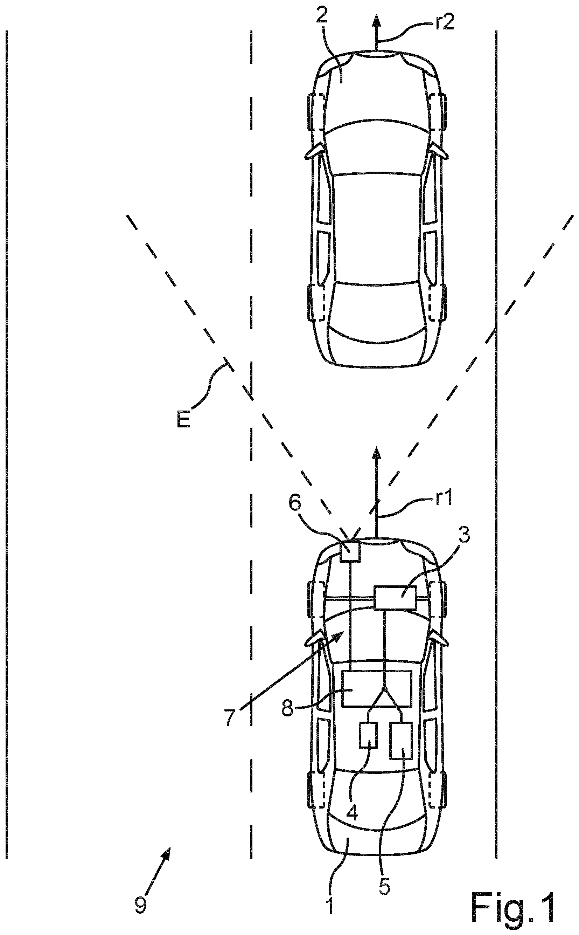

Fig. 1 zeigt einen Kraftwagen 1, welcher sich beispielsweise auf der rechten Spur einer Fahrbahn 9 in Richtung r1 mit der Geschwindigkeit v1 bewegt. Vor diesem Kraftwagen 1 fährt ein weiterer Kraftwagen 2 in dieselbe Richtung r2, jedoch mit der geringeren Geschwindigkeit v2.

Bei dem Kraftwagen 1 handelt es sich um ein Elektrofahrzeug, dessen Vorderräder durch einen Elektromotor 3 angetrieben werden. Die hierfür erforderliche elektrische Energie wird während des normalen Fahrbetriebs von einer Traktionsbatterie 5 bereitgestellt. Zudem umfasst der Kraftwagen 1 eine Fahrerassistenzeinrichtung 7 mit einem Radarsensor 6 und einer Steuereinrichtung 8. Der Kraftwagen 1 befindet sich in einem automatischen Fahrbetrieb, welcher von der Fahrerassistenzeinrichtung 7 geregelt wird. Hierbei erfasst der Radarsensor 6 den Kraftwagen 2 innerhalb eines Erfassungsbereichs E. Der Kraftwagen 2 stellt ein Objekt dar, das vom Radarsensor 6 erfasst werden kann, wobei die Fahrerassistenzeinrichtung 7 insbesondere so ausgebildet ist, dass sich mit ihr die Geschwindigkeit v2 des Kraftwagens 2 bestimmen lässt. Die Geschwindigkeit v2 des Kraftwagens 2 ist damit ein diesem Objekt zukommendes Objektcharakteristikum, das innerhalb der Fahrerassistenzeinrichtung 7 ausgewertet wird. Diese Auswertung besteht insbesondere in einer Ermittlung der Relativgeschwindigkeit zwischen den Kraftwägen 1 und 2: • v = v2 - v1. Die Fahrerassistenzeinrichtung 7 überwacht die zeitliche Änderung dieser Relativgeschwindigkeit • v. Sie erkennt, dass die Relativgeschwindigkeit • v konstant und negativ ist, sodass eine Kollisionsgefahr mit dem Kraftwagen 2 besteht. Dementsprechend wird die Durchführung einer Schub- und/oder Bremsphase als angezeigt erkannt.

Neben dem vorrangigen Aspekt der Sicherheit (Kollisionsvermeidung mit dem Kraftwagen 2), wird hierbei von der Fahrerassistenzeinrichtung 7 insbesondere auch der Aspekt einer möglichst großen Energierückführung bzw. -rekuperation berücksichtigt. Zum Zwecke der Energierekuperation kann eine Schubphase des Kraftwagens 1 eingeleitet und der Elektromotor 3 als elektrischer Generator betrieben werden. Es seien drei Szenarien diskutiert:
Bei einem ersten Szenario ist v1 nur geringfügig größer als v2, so dass der Abstand zwischen den Kraftwägen 1 und 2 mäßig schnell abnimmt. Dann ist eine Kollisionsgefahr zwischen den Kraftwägen 1 und 2 nicht unmittelbar gegeben und eine geringe Verzögerung des Kraftwagens 1 ist ausreichend, um ein Zusammenstoßen zu vermeiden. Es kann also mit einem relativ geringen Verzögerungswert die Geschwindigkeit reduziert werden, wenn die Verringerung von v1 des Kraftwagens 1 innerhalb eines entsprechenden Zeitintervalls nach Feststellung der Relativgeschwindigkeit beginnt. Die Bremswirkung wird über den als Generator betriebenen Elektromotor 3 erzielt, wobei pro Zeiteinheit nur wenig Bremsenergie gewonnen wird. Mittels dieser geringen Bremsleistungen lässt sich die Traktionsbatterie 5 aufladen. Dementsprechend wird die vom Elektromotor 3 bereitgestellte Energie mittels der Steuereinrichtung 8 ausschließlich in die Traktionsbatterie 5 eingespeist, welche dadurch wiederaufgeladen wird. Die Verringerung von v1 kann durch Schubphasen und/oder Bremsphasen erreicht werden, wobei der Verzögerungswert während der Verringerung von v1 variiert werden kann.

Bei einem zweiten Szenario ist v1 viel größer als v2, so dass der Abstand zwischen den Kraftwägen 1 und 2 sehr schnell abnimmt. Die Auswertung des Objektcharakteristikums • v ergibt damit, dass zur Vermeidung einer Kollision eine stärkere und gegebenenfalls unverzügliche Verringerung von v1 erforderlich ist. Die Schub- und/oder Bremsphase wird automatisch so angepasst, dass sich größere Verzögerungswerte ergeben. Folglich werden größere Bremsleistungen und damit pro Zeiteinheit auch höhere elektrische Ströme vom Elektromotor 3 als im ersten Szenario bereitgestellt. Die Fahrerassistenzeinrichtung 7 kennt die Ladecharakteristik der Traktionsbatterie 5 und weiß, dass die kurzzeitig hohen elektrischen Leistungen zu einer Beschädigung der Traktionsbatterie 5 führen würden. Dementsprechend wird die Steuereinrichtung 8 angewiesen, die vom Elektromotor 3 bereitgestellten Ströme nicht in die Traktionsbatterie 5, sondern in einen Kondensator 4 einzuleiten. Seine Ladecharakteristik ist den hohen Generatorleistungen besser angepasst.

Bei einem dritten Szenario ist v1 erheblich größer als v2, so dass der Abstand zwischen den Kraftwägen 1 und 2 noch schneller abnimmt als im zweiten Szenario. Die Fahrerassistenzeinrichtung 7 erkennt durch die Überwachung von • v, dass eine Kollision zwischen den Kraftwägen 1 und 2 unmittelbar bevorsteht. Die Vorgabe einer möglichst hohen Energierekuperation wird in dieser Situation von der Fahrerassistenzeinrichtung 7 als sekundär eingestuft. Dementsprechend wird von der Fahrerassistenzeinrichtung 7 die mechanische Bremse betätigt. Zur Verstärkung der Bremswirkung wird auch der Elektromotor 3 als Generator betrieben, wobei die hohen Bremsleistungen eine Rekuperation in den Kondensator 4 erlauben.

Erkennt die Fahrerassistenzeinrichtung 7 den Kraftwagen 2 beispielsweise in 100 m Entfernung mit niedriger Geschwindigkeit v2, so reicht eine moderate Verzögerung mit keiner oder nur leichter Radbremsunterstützung aus, um die eigene Geschwindigkeit v1 entsprechend dem erkannten Kraftwagen 2 zu verringern. Somit kann so lange wie möglich Energie ideal rückgespeist werden. Der Elektromotor 3 kann beispielsweise als Generator gezielt im optimalen Wirkungsgrad betrieben werden. Entsprechende Regel- und Stellparameter können bedarfsgerecht angepasst werden.

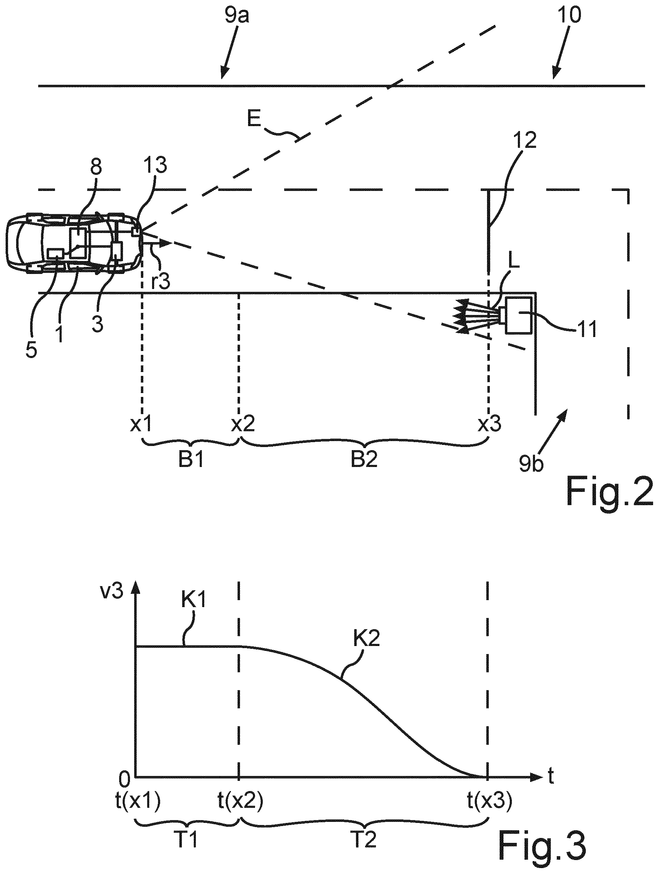

Vorteilhaft für die optimale Rückführung von Energie kann auch eine Kamera 13 mit Verkehrszeichenerkennung bzw. Verkehrssituationserfassung sein. Diese Situation ist in Fig. 2 dargestellt. Der Kraftwagen 1, dessen Kamera 13 den Erfassungsbereich E erfasst, bewegt sich mit Geschwindigkeit v3 in Richtung r3 auf einer Fahrbahn 9a auf eine T-Kreuzung 10 zu. An der T-Kreuzung 10 mündet die Fahrbahn 9b in die Fahrbahn 9a ein. Deshalb ist vor der T-Kreuzung 10 eine Ampel 11 angebracht, welche über die Ausstrahlung von rotem Licht L anzeigt, dass ein Fahrzeug an der Stopp-Linie 12 zum Stillstand gekommen sein muss.

Die Fahrerassistenzeinrichtung 7 des Kraftwagens 1 ist so ausgebildet, dass sie mittels der Kamera 13 in der Lage ist, das rote Licht L der Ampel 11 zu erfassen und dieses Objektcharakteristikum auszuwerten. Es wird erkannt, dass der Kraftwagen 1 seine Geschwindigkeit verringern muss, um an der Stopp-Linie 12 zum Stillstand zu kommen. Folglich rechnet die Fahrerassistenzeinrichtung 7, nachdem sie die rote Ampel 11 erkannt hat, bereits mit einer Rückführung von Energie und kann alle Systeme des Kraftwagens 1 entsprechend parametrieren. Ein entsprechender Algorithmus der Fahrerassistenzeinrichtung 7 berechnet, dass es vorteilhaft ist, die momentane Geschwindigkeit v3 von einem Ort x1 bis zu einem Ort x2 (also über einen Bereich B1) konstant beizubehalten und von einem Ort x2 ab den Kraftwagen 1 über einen Bereich B2 geeignet zu verzögern, sodass er am Ort der Stopp-Linie 12, welcher mit x3 bezeichnet ist, zum Stillstand kommt.

Dieses Fahrverhalten ist schematisch in Fig. 3 dargestellt. Über eine Zeitdauer T1 zwischen einem Zeitpunkt t(x1), bei dem sich der Kraftwagen 1 am Ort x1 befindet, und einem Zeitpunkt t(x2), bei dem sich der Kraftwagen 1 am Ort x2 befindet, wird die Geschwindigkeit v3 gemäß Kurve K1 konstant beibehalten. Mit dem Verzögern wird vom Zeitpunkt t(x2) an begonnen, wobei kontinuierlich über eine Zeitdauer T2 hinweg verzögert wird, bis zu einem Zeitpunkt t(x3), zu welchem sich der Kraftwagen 1 am Ort x3 befindet, seine Geschwindigkeit auf null reduziert ist. Das Verzögerungsverhalten folgt einer Kurve K2. Die Zeitdauer T2 stellt damit eine Schub- bzw. Bremsphase des Kraftwagens 1 dar.

Das Verzögerungsverhalten gemäß der Kurve K2 wird an die im Kraftwagen 1 vorhandenen Energiespeicher angepasst. Im Gegensatz zum Ausführungsbeispiel der Fig. 1 umfasst der Kraftwagen 1 der Fig. 2 als Energiespeicher lediglich eine Traktionsbatterie 5. Diese Traktionsbatterie 5 weist eine charakteristische Ladekurve auf, welche durch physikalische Parameter vorgegeben ist. Der Kurvenverlauf der Kurve K2 wird nun von der Fahrerassistenzeinrichtung 7 so an die Ladecharakteristik der Traktionsbatterie 5 angepasst, dass sich für diese ein optimales Ladeverhalten ergibt.

Der Kraftwagen 1 kommt an der Stopp-Linie 12 sicher zu stehen; gleichzeitig wird in dieser Situation Energie bestmöglich rückgewonnen. Zusätzlich kann beim Energierückspeisen, also bei der Wahl der Kurvenverläufe K1 und K2, auch der subjektive Komfort für Fahrzeuginsassen mitberücksichtigt werden. Eine solche Komfortoptimierung kann beispielsweise darin bestehen, dass ruckartig starke Bremsvorgänge, auch wenn sie für die Rekuperation vorteilhaft sein sollten, vermieden werden.

Zusammenfassend erlaubt das von der Fahrerassistenzeinrichtung implementierte Verfahren, mithilfe der Umfeldsensoren und/oder geeigneter Objekt-Tracking-Algorithmen die ideale Strategie zu benutzen, um ein Optimum an Energie rückführen zu können.

## Patentansprüche

1. Verfahren zum Betreiben eines Fahrzeugs (1), bei welchem in Schub- und/oder Bremsphasen (T2) des Fahrzeugs (1) Energie rekuperiert und in einen fahrzeuginternen Energiespeicher (4, 5) gespeichert wird, wobei die Umgebung (E) des Fahrzeugs (1) mittels einer Detektoreinrichtung (6, 13) erfasst wird und abhängig von einem Erfassen eines Objekts (2, 11) in der Fahrzeugumgebung (E) zumindest ein Objektcharakteristikum (v2, • v, L) ausgewertet wird, **dadurch gekennzeichnet, dass** abhängig von der Auswertung des Objektcharakteristikums (v2, • v, L) die Schub- und/oder Bremsphase (T2) automatisch an zumindest einen den Energiespeicher (4, 5) kennzeichnenden Parameter angepasst durchgeführt wird.

2. Verfahren nach Anspruch 1,
**dadurch gekennzeichnet, dass**
zeitlich unmittelbar im Anschluss an die Auswertung des Objektcharakteristikums (v2, • v, L) über ein erstes Zeitintervall (T1) keine Schub- und/oder Bremsphase erfolgt und zeitlich unmittelbar im Anschluss an das erste Zeitintervall (T1) die an den zumindest einen Parameter angepasste Durchführung der Schub- und/der Bremsphase (T2) erfolgt.

3. Verfahren nach Anspruch 1 oder 2,
**dadurch gekennzeichnet, dass**
der zumindest eine den Energiespeicher (4, 5) beschreibende Parameter eine Ladekapazität und/oder einen Ladezustand und/oder zumindest einen Teil einer Ladekurve des Energiespeichers (4, 5) charakterisiert.

4. Verfahren nach einem der vorhergehenden Ansprüche,
**dadurch gekennzeichnet, dass**
das Fahrzeug (1) zumindest zwei fahrzeuginterne Energiespeicher (4, 5) umfasst und die Schub- und/oder Bremsphase (T2) automatisch so an die zumindest zwei Energiespeicher (4, 5) angepasst durchgeführt wird, dass ein erster Anteil der zu rekuperierenden Energie in einen ersten (4) der zumindest zwei Energiespeicher (4, 5) eingespeist wird und ein zweiter Anteil der zu rekuperierenden Energie in einen vom ersten verschiedenen zweiten (5) der zumindest zwei Energiespeicher (4, 5) eingespeist wird.

5. Verfahren nach einem der vorhergehenden Ansprüche,
**dadurch gekennzeichnet, dass**
als Objektcharakteristikum eine Geschwindigkeit (v2, • v) eines vorausfahrenden Fahrzeugs und/oder eine Form und/oder eine Farbe (L) und/oder eine Textur eines Verkehrszeichens ausgewertet wird.

6. Verfahren nach einem der vorhergehenden Ansprüche,
**dadurch gekennzeichnet, dass**
der Energiespeicher einen Kondensator, insbesondere einen elektrochemischen Doppelschicht-Kondensator (4), und/oder einen chemischen Energiespeicher und/oder eine elektrochemische Zelle (5) und/oder einen thermischen Energiespeicher, insbesondere einen Latentwärmespeicher, und/oder einen mechanischen Energiespeicher, insbesondere ein Schwungrad, und/oder einen Druckbehälter für eine Klimaanlage umfasst.

7. Verfahren nach einem der vorhergehenden Ansprüche,
**dadurch gekennzeichnet, dass**
das Rekuperieren von Energie mittels einer elektrischen Maschine (3) erfolgt, welche insbesondere auch als Antriebsmaschine des Fahrzeugs (1) betreibbar ist.

8. Verfahren nach einem der vorhergehenden Ansprüche,
**dadurch gekennzeichnet, dass**
das Erfassen der Umgebung (E) des Fahrzeugs (1), das Auswerten des Objektcharakteristikums (v2, • v, L) und das angepasste Durchführen der Schub- und/oder Bremsphase (T2) während einer von Bedienhandlungen eines Fahrzeugführers zumindest teilweise unabhängigen automatischen Fahrzeugführung erfolgt.

9. Fahrerassistenzeinrichtung (7) für ein Fahrzeug (1), zur Steuerung der Speicherung von in Schub- und/oder Bremsphasen (T2) des Fahrzeugs (1) rekuperierter Energie in einen fahrzeuginternen Energiespeicher (4, 5), welche eine Detektoreinrichtung (6, 13) und eine Steuereinrichtung (8) umfasst, wobei die Detektoreinrichtung (6, 13) dazu ausgebildet ist, die Umgebung (E) des Fahrzeugs (1) zu erfassen,
die Steuereinrichtung (8) dazu ausgebildet ist, abhängig von einem Erfassen eines Objekts (2, 11) in der Fahrzeugumgebung (E) durch die Detektoreinrichtung (6, 13) Informationen zumindest eines Objektcharakteristikums (v2, • v, L) auszuwerten und abhängig davon die Schub- und/oder Bremsphase (T2) automatisch an zumindest einen den Energiespeicher (4, 5) kennzeichnenden Parameter angepasst durchzuführen.

10. Fahrerassistenzeinrichtung nach Anspruch 9,
**dadurch gekennzeichnet, dass**
die Detektoreinrichtung einen Abstandssensor und/oder einen Ultraschallsensor und/oder eine Kamera (13) und/oder einen Radarsensor (6) und/oder einen Lidarsensor umfasst.

## Claims

1. Method for operating a vehicle (1), in which energy is recovered in overrun and/or braking phases (T2) of the vehicle (1) and stored in an energy store (4, 5) within the vehicle,
wherein
the environment (E) of the vehicle (1) is detected by means of a detector (6, 13) and, depending on detection of an object (2, 11) in the vehicle environment (E), at least one object characteristic (v2, •v, L) is evaluated, **characterized in that**, depending on the evaluation of the object characteristic (v2, •v, L), the overrun and/or braking phase (T2) is performed automatically in a manner adapted to at least one parameter characterizing the energy store (4, 5).

2. Method according to Claim 1,
**characterized in that**,
at a time immediately after the evaluation of the object characteristic (v2, •v, L), no overrun and/or braking phase takes place over a first time interval (T1) and, at a time immediately after the first time interval (T1), the overrun and/or braking phase (T2) is performed in a manner adapted to the at least one parameter.

3. Method according to Claim 1 or 2,
**characterized in that**
the at least one parameter describing the energy store (4, 5) characterizes a charge capacity and/or a state of charge and/or at least part of a charging curve of the energy store (4, 5).

4. Method according to one of the preceding claims,
**characterized in that**
the vehicle (1) comprises at least two energy stores (4, 5) within the vehicle, and the overrun and/or braking phase (T2) is performed automatically in a manner adapted to the at least two energy stores (4, 5) in such a way that a first fraction of the energy to be recovered is fed into a first (4) of the at least two energy stores (4, 5) and a second fraction of the energy to be recovered is fed into a second (5) of the at least two energy stores (4, 5), said second energy store being different from the first energy store.

5. Method according to one of the preceding claims,
**characterized in that**
a speed (v2, •v) of a vehicle in front and/or a shape and/or a colour (L) and/or a texture of a road sign is/are evaluated as an object characteristic.

6. Method according to one of the preceding claims,
**characterized in that**
the energy store comprises a capacitor, in particular an electrochemical double-layer capacitor (4), and/or a chemical energy store and/or an electrochemical cell (5) and/or a thermal energy store, in particular a latent heat store, and/or a mechanical energy store, in particular a flywheel, and/or a pressure reservoir for an air conditioning system.

7. Method according to one of the preceding claims,
**characterized in that**
energy recovery is accomplished by means of an electric machine (3) which, in particular, can also be operated as a drive motor for the vehicle (1).

8. Method according to one of the preceding claims,
**characterized in that**
detection of the environment (E) of the vehicle (1), evaluation of the object characteristic (v2, •v, L) and adapted performance of the overrun and/or braking phase (T2) take place during automatic vehicle guidance at least partially independent of operating actions of a vehicle driver.

9. Driver assistance device (7) for a vehicle (1), for controlling the storage of energy recovered in overrun and/or braking phases (T2) of the vehicle (1) in an energy store (4, 5) within the vehicle, which comprises a detector (6, 13) and a control unit (8), wherein the detector (6, 13) is designed to detect the environment (E) of the vehicle (1), the control unit (8) is designed, depending on detection of an object (2, 11) in the vehicle environment (E) by the detector (6, 13), to evaluate information on at least one object characteristic (v2, •v, L) and, in accordance therewith, to perform the overrun and/or braking phase (T2) automatically in a manner adapted to at least one parameter characterizing the energy store (4, 5).

10. Driver assistance device according to Claim 9, **characterized in that**
the detector comprises a distance sensor and/or an ultrasonic sensor and/or a camera (13) and/or a radar sensor (6) and/or a lidar sensor.

## Revendications

1. Procédé pour faire fonctionner un véhicule (1), selon lequel de l'énergie est récupérée dans les phases de poussée et/ou de freinage (T2) du véhicule (1) et accumulée dans un accumulateur d'énergie (4, 5) interne au véhicule,
l'environnement (E) du véhicule (1) étant balayé au moyen d'un dispositif détecteur (6, 13) et au moins une caractéristique d'objet (v2, •v, L) étant interprétée en fonction d'une détection d'un objet (2, 11) dans l'environnement du véhicule (E), **caractérisé en ce que** suivant l'interprétation de la caractéristique d'objet (v2, •v, L), la phase de poussée et/ou de freinage (T2) est exécutée en étant adaptée automatiquement à au moins un paramètre qui caractérise l'accumulateur d'énergie (4, 5).

2. Procédé selon la revendication 1, **caractérisé en ce qu'**aucune phase de poussée et/ou de freinage n'a lieu durant un premier intervalle de temps (T1) chronologiquement directement à la suite de l'interprétation de la caractéristique d'objet (v2, •v, L) et l'exécution de la phase de poussée et/ou de freinage adaptée à l'au moins un paramètre a lieu chronologiquement directement à la suite du premier intervalle de temps (T1).

3. Procédé selon la revendication 1 ou 2, **caractérisé en ce que** l'au moins un paramètre qui décrit l'accumulateur d'énergie (4, 5) caractérise une capacité de charge et/ou un état de charge et/ou au moins une partie d'une courbe de charge de l'accumulateur d'énergie (4, 5).

4. Procédé selon l'une des revendications précédentes, **caractérisé en ce que** le véhicule (1) comprend au moins deux accumulateurs d'énergie (4, 5) internes au véhicule et la phase de poussée et/ou de freinage (T2) est exécutée en étant adaptée automatiquement aux au moins deux accumulateurs d'énergie (4, 5) de telle sorte qu'une première part de l'énergie à récupérer est injectée dans un premier (4) des au moins deux accumulateurs d'énergie (4, 5) et une deuxième part de l'énergie à récupérer est injectée dans un deuxième (5), différent du premier, des au moins deux accumulateurs d'énergie (4, 5).

5. Procédé selon l'une des revendications précédentes, **caractérisé en ce que** la caractéristique d'objet interprétée est une vitesse (v2, •v) d'un véhicule qui précède et/ou une forme et/ou une couleur (L) et/ou une texture d'un panneau de signalisation routière.

6. Procédé selon l'une des revendications précédentes, **caractérisé en ce que** l'accumulateur d'énergie comprend un condensateur, notamment un condensateur électrochimique à double couche (4), et/ou un accumulateur d'énergie chimique et/ou une cellule électrochimique (5) et/ou un accumulateur d'énergie thermique, notamment un accumulateur à chaleur latente, et/ou un accumulateur d'énergie mécanique, notamment un volant oscillant, et/ou un réservoir sous pression pour un climatiseur.

7. Procédé selon l'une des revendications précédentes, **caractérisé en ce que** la récupération d'énergie s'effectue au moyen d'une machine électrique (3) qui peut notamment aussi fonctionner comme un moteur de propulsion du véhicule (1).

8. Procédé selon l'une des revendications précédentes, **caractérisé en ce que** le balayage de l'environnement (E) du véhicule (1), l'interprétation de la caractéristique d'objet (v2, •v, L) et l'exécution adaptée de la phase de poussée et/ou de freinage (T2) s'effectuent pendant une conduite du véhicule automatique au moins partiellement indépendante des manipulations de commande d'un conducteur du véhicule.

9. Dispositif d'assistance au conducteur (7) pour un véhicule (1), destiné à commander l'accumulation de l'énergie récupérée dans les phases de poussée et/ou de freinage (T2) du véhicule (1) dans un accumulateur d'énergie (4, 5) interne au véhicule, lequel comprend un dispositif détecteur (6, 13) et un dispositif de commande (8), le dispositif détecteur (6, 13) étant configuré pour balayer l'environnement (E) du véhicule (1)
le dispositif de commande (8) étant configuré pour, en fonction d'une détection d'un objet (2, 11) dans l'environnement du véhicule (E) par le dispositif détecteur (6, 13), interpréter des informations d'au moins une caractéristique d'objet (v2, •v, L) et, en fonction de celles-ci, exécuter la phase de poussée et/ou de freinage (T2) en l'adaptant automatiquement à au moins un paramètre qui caractérise l'accumulateur d'énergie (4, 5).

10. Dispositif d'assistance au conducteur selon la revendication 9, **caractérisé en ce que** le dispositif détecteur comprend un capteur de distance et/ou un capteur à ultrasons et/ou une caméra (13) et/ou un capteur radar (6) et/ou un capteur lidar.
